# EUROPÄISCHE PATENTSCHRIFT

(11) **EP 0 436 081 B1**
(45) Veröffentlichungstag und Bekanntmachung des Hinweises auf die Patenterteilung: **23.02.1994**
(21) Anmeldenummer: 90120171.5
(22) Anmeldetag: 20.10.1990
(51) Int. Cl.: B05B 13/02, B65G 19/02

(54) **Fördereinrichtung**
Conveyor device
Dispositif de transport

(30) Priorität: 05.12.1989 DE 3940231
(43) Veröffentlichungstag der Anmeldung: 10.07.1991
(73) Patentinhaber: Dürr GmbH, D-70435 Stuttgart (DE)
(72) Erfinder: Besinger, Hartwig, W-7142 Marbach (DE); Weeber, Heinrich, W-7144 Asperg (DE)
(74) Vertreter: Hoeger, Stellrecht & Partner

(56) Entgegenhaltungen:
- EP-A- 0 255 620
- WO-A-86/04029
- GB-A- 2 195 965

## Beschreibung

Die Erfindung betrifft eine Fördereinrichtung zum Fördern von Warenträgern mit darauf gehaltenem Behandlungsgut durch einen Behandlungsbereich einer Behandlungsanlage, insbesondere einer Lackieranlage, umfassend eine die Warenträger in einer Führungsebene führende Führungsbahn, welche zwei im Abstand voneinander angeordnete und in einer Förderrichtung verlaufende Reihen von Führungselementen aufweist, mindestens eine Behandlungsstation, in welcher einer der Warenträger während eines Taktintervalls positionierbar ist und mindestens ein Förderglied, welches in vorbestimmten Zeitintervallen an dem Warenträger angreift und diesen in Förderrichtung von der Behandlungsstation weg bewegt, wobei jedes Förderglied zwischen sich in Förderrichtung erstreckenden Längsführungen geführt ist.

Derartige Fördereinrichtungen sind aus der GB-A-2 195 965 bekannt. Diese Fördereinrichtung sieht vor, zur Vermeidung der Verschmutzung im Bereich der Behandlungsstation sowohl den auf der Führungsbahn laufenden Teil des Warenträgers als auch das Förderglied und die Längsführungen für dieses unter einer gemeinsamen alles übergreifenden Abdeckung anzuordnen und eine Verbindung zwischen das Behandlungsgut haltenden Trägern durch einen einen obenliegenden Schlitz der Abdeckung durchgreifenden Halter zu schaffen.

Bei dieser Art der Abdeckung besteht jedoch das Problem, daß sie stets nach kurzen Zeitintervallen gereinigt werden muß, da durch die Behandlungsanlagen Behandlungsmittel sich auf der Abdeckung absetzt und somit in dem Behandlungsbereich, insbesondere bei einem diesen von oben nach unten durchsetzenden Luftstrom, stets eine dem Warenträger naheliegende Schmutzquelle existiert.

Der Erfindung liegt daher die Aufgabe zugrunde, eine Fördereinrichtung der gattungsgemäßen Art derart zu verbessern, daß Reinigungsprobleme und großflächige Schmutzquellen nicht mehr auftreten.

Diese Aufgabe wird bei einer Fördereinrichtung der eingangs beschriebenen Art erfindungsgemäß dadurch gelöst, daß jede der Längsführungen unter jeweils einer Schutzabdeckung verläuft, die zum Schutz der Längsführungen gegen den Einfluß des Behandlungsmittels zum Behandlungsbereich hin geschlossen sind und dem Behandlungsbereich abgewandte Öffnungen für einen Förderträger aufweisen, daß sich der Förderträger zwischen den unter den Schutzabdeckungen verlaufenden Längsführungen erstreckt und an diesem geführt ist und daß der Förderträger das Förderglied trägt.

Durch das erfindungsgemäße Konzept wird sichergestellt, daß der Förderträger lediglich teilweise dem Behandlungsmittel ausgesetzt ist, daß aber die Längsführungen für den Förderträger, mit welchen dieser geführt ist, durch die Schutzabdeckungen von dem Einfluß des Behandlungsmittels geschützt sind und somit eine Reinigung der kritischen beweglichen Teile nicht oder nur selten erforderlich ist.

Insbesondere handelt es sich bei der erfindungsgemäßen Fördereinrichtung um eine Taktförderanlage, welche mehrere Förderglieder umfaßt, wobei beim Fördervorgang jeweils jedes Förderglied an einem Warenträger angreift und diesen von einer ersten Station zur nächstfolgenden zweiten Station bringt, dann wieder zur vorhergehenden ersten Station zurückfährt und dann beim nächsten Fördervorgang wieder aus dieser Station den Warenträger in die nächstfolgende Station bewegt, so daß jedes Förderglied zwischen zwei in Förderrichtung aufeinanderfolgende Stationen arbeitet und die Warenträger zwischen diesen fördert und in der jeweils in Förderrichtung vorderen Station an das nächstfolgende Förderglied übergibt, während es an der in Förderrichtung hinteren Station den Warenträger vom vorhergehenden Förderglied übernimmt.

Insbesondere sind die Fördereinrichtungen als Fördereinrichtungen für Behandlungsanlagen konzipiert, bei welchen der Behandlungsbereich von einem Luftstrom durchsetzt ist, welcher teilweise auch die Fördereinrichtung, insbesondere im Bereich zwischen den Schutzabdeckungen, durchsetzen muß, um überschüssiges Behandlungsmittel, welches nicht auf das Behandlungsgut aufgebracht wurde, zu einem Abscheider für das Behandlungsmittel abzutransportieren, welcher vorzugsweise auf einer dem Behandlungsbereich gegenüberliegenden Seite der Fördereinrichtung angeordnet ist.

Im Rahmen der erfindungsgemäßen Lösung hat es sich als besonders vorteilhaft erwiesen, wenn die Führungsbahn den Warenträger auf einer dem Behandlungsbereich abgewandten Seite führt, da somit der gesamte Behandlungsbereich zum Auftrag von Behandlungsmittel durch die Behandlungsanlage zur Verfügung steht. Insbesondere ist vorgesehen, daß die Führungsbahn unterhalb des Behandlungsbereichs verläuft.

Ein besonders effektiver Schutz der Längsführungen ist dann gegeben, wenn sich die Schutzabdeckungen von der Führungsebene nach unten erstrecken.

Ferner ist vorgesehen, daß die Schutzabdeckungen Lagerungen der Führungselemente mit abdecken und somit zusätzlich zu den Längsführungen auch noch die Lagerungen der Führungselemente gegen das Eindringen von Behandlungsmittel geschützt sind.

Besonders vorteilhaft ist es, wenn die Schutzabdeckungen Öffnungen aufweisen, durch welche die Führungselemente teilweise herausragen, so daß die Führungselemente so angeordnet werden können, daß sie zu einem möglichst geringen Teil über die Schutzabdeckungen durch die Öffnungen überstehen und der übrige Teil der Führungselemente einschließlich der Lagerungen derselben geschützt in den Schutzabdeckungen liegt.

Im einfachsten Fall ist vorteilhafterweise vorgesehen, daß die Führungselemente Führungsrollen sind und somit die Führungsbahn eine Rollenbahn ist, auf welcher der Warenträger verschiebbar ist.

Als besonders vorteilhaft hat es sich im Rahmen der erfindungsgemäßen Lösung erwiesen, wenn die Schutzabdeckungen einen Raum zur Aufnahme der Führungselemente und in einen von diesem getrennten Raum zur Aufnahme der Längsführungen unterteilt sind, so daß beispielsweise durch die Öffnungen für die Führungselemente eindringendes Behandlungsmittel nicht auch zu den Längsführungen gelangen kann, sondern sich in dem speziellen Raum für die Führungselemente absetzt.

Eine besonders zweckmäßige technische Realisierung sieht vor, daß die Schutzabdeckungen in Förderrichtung verlaufende Kanäle bilden, in welchen die einzelnen Teile, d.h. also die Längsführungen und die Führungselemente, untergebracht sind.

Insbesondere bei einer Fördereinrichtung, welche einem Teil des den Behandlungsbereich durchsetzenden Luftstroms ausgesetzt sind, hat es sich als vorteilhaft erwiesen, wenn die Schutzabdeckungen sich in Richtung von dem Behandlungsbereich weg konisch erweiternd ausgebildet sind, um den die Fördereinrichtung durchsetzenden, vom Behandlungsbereich kommenden und Behandlungsmittel tragenden Luftstrom möglichst wenig zu stören und daher möglichst geringe Verwirbelungen im Bereich der Fördereinrichtung zu erzeugen.

Dabei ist insbesondere vorgesehen, daß die Schutzabdeckungen in Richtung von dem Behandlungsbereich weg konisch aufeinander zu verlaufende Innenwände aufweisen.

Vorzugsweise sind die Innenwände so ausgebildet, daß sie sich unmittelbar an die Öffnungen für die Führungselemente anschließen, so daß die Schutzabdeckung im Bereich der Öffnungen für die Führungselemente die geringste Breite aufweisen und sich ausgehend von diesen konisch erweitern.

Insbesondere strömungsgünstig ist die erfindungsgemäße Fördereinrichtung dann, wenn die Schutzabdeckungen für die parallel zueinander verlaufenden Längsführungen zwischen sich einen Freiraum bilden, in welchem das Förderglied in Förderrichtung verfahrbar ist.

Besonders vorteilhaft ist es, wenn der Freiraum einen freien Luftdurchtritt für einen durch den Behandlungsbereich geführten Luftstrom bildet und somit diesen möglichst störungsfrei passieren läßt, so daß sich das von diesem Luftstrom mitgetragene Behandlungsmittel möglichst nicht im Bereich der Fördereinrichtung absetzt, sondern zu dem vorzugsweise unterhalb der Fördereinrichtung angeordneten Abscheider geführt wird.

Ein besonders vorteilhafter Schutz für alle unter den Schutzabdeckungen angeordneten Teile ist dann gegeben, wenn die Schutzabdeckungen eine Außenwand aufweisen, welche bis zu einem Bodenteil gezogen ist.

Ein besonders effektiver Schutz für die Längsführungen läßt sich dann erreichen, wenn der Förderträger ausschließlich in einer zur Förderrichtung parallelen Trägerebene und in dieser nur in Förderrichtung und entgegengesetzt dazu bewegbar ist, so daß die Öffnungen, welche der Förderträger durchsetzt, sich lediglich parallel zur Förderrichtung erstrecken und eine minimale Größe aufweisen können.

Ferner ist es besonders vorteilhaft, wenn ein Verschiebeantrieb für den Förderträger unter der Schutzabdeckung angeordnet ist, so daß auch dieser gegen Behandlungsmittel geschützt ist.

Zusätzlich ist es vorteilhaft, wenn eine Kabelzuführung für den Förderträger unter der Schutzabdeckung angeordnet ist, um diese ebenfalls zu schützen.

Vorzugsweise ist eine optimale Aufteilung des Verschiebeantriebs und der Kabelzuführung so gewählt, daß in einer der Schutzabdeckungen der Verschiebeantrieb und in der gegenüberliegenden die Kabelzuführung für den Förderträger angeordnet sind.

Eine besonders zweckmäßige Anordnung sieht vor, daß die Längsführungen auf einer dem Behandlungsbereich abgewandten Seite der Reihen von Führungselementen angeordnet sind, so daß die Reihen von Führungselementen über den Längsführungen liegen.

Im einfachsten Fall sind die Längsführungen als Längsschienen ausgebildet, an denen der Förderträger geführt ist, wobei die Längsschienen insbesondere C-förmig sind.

Im Zusammenhang mit den bislang erläuterten Ausführungsbeispielen wurde nichts darüber ausgesagt, wie der Förderträger gehalten sein soll.

Besonders vorteilhaft ist es dabei, wenn der Förderträger Teil eines Förderrahmens ist.

Vorzugsweise ist dabei der Förderrahmen so ausgebildet, daß der sich in Förderrichtung erstreckende Rahmen Längsträger aufweist, wobei zweckmäßigerweise die Rahmenlängsträger unter den Schutzabdeckungen angeordnet sind und sich lediglich der zwischen diesen Rahmenlängsträgern liegende Förderträger frei zwischen den Schutzabdeckungen erstreckt.

Konstruktiv ist dies insbesondere dadurch gelöst, daß die Schutzabdeckungen mit ihren Innenwänden an den Rahmenlängsträgern anliegen.

Insbesondere sind die Innenwände so ausgebildet, daß sie mit einer Unterkante an dem Rahmen anliegen, wobei vorzugsweise die Unterkante eine Gummilippe trägt und somit einen gegen das Behandlungsmittel möglichst dichten Abschluß zwischen der Schutzabdeckung und dem Rahmen erlaubt, so daß das zwischen den Schutzabdeckungen hindurchgeführte Behandlungsmittel nicht unter die Schutzabdeckung eindringen kann.

Ferner ist es besonders zweckmäßig, wenn das Bodenteil einen zum Rahmen geführten und längs diesem abschließenden Randbereich aufweist.

Bei den bislang beschriebenen Ausführungsbeispielen wurde ferner nicht näher spezifiziert, wie das Förderglied am Förderträger angeordnet sein soll.

Insbesondere hat es sich als vorteilhaft erwiesen, wenn jeder Förderträger eine Aufnahme für das Förderglied trägt.

Diese Aufnahme ist dabei zweckmäßigerweise zwischen den die Längsführungen übergreifenden Schutzabdeckungen angeordnet.

Im einfachsten Fall ist das Förderglied so ausgebildet, daß es einen schwenkbar an der Aufnahme gelagerten Mitnahmefinger umfaßt, um diesen Mitnahmefinger zwischen einer den Warenträger greifenden oder nichtgreifenden Stellung verschwenken zu können.

Im einfachsten Fall ist vorgesehen, daß das Förderglied an einer Querstrebe des Warenträgers angreift.

Um ein sicheres Führen des Warenträgers beim Fördern desselben von einer Station zur nächsten zu gewährleisten, ist es zweckmäßig, wenn das Förderglied zwei zum Angriff am Warenträger aufeinander zu schwenkbare und die Querstrebe in Förderrichtung und entgegengesetzt dazu zum Fördern haltende Mitnahmefinger umfaßt, welche insbesondere in ihrer den Warenträger nicht greifenden Stellung voneinander weg geschwenkt sind.

Bei den bislang beschriebenen Ausführungsbeispielen wurde nichts darüber ausgesagt, wie die Fördereinrichtung ausgebildet sein soll, um den Warenträger in der Behandlungsstation zu positionieren.

Als besonders zweckmäßig hat es sich erwiesen, wenn der Warenträger in der Behandlungsstation durch einen Haltefinger positionierbar ist.

Da auch dieser Haltefinger Verschmutzungen durch das Behandlungsmittel ausgesetzt ist, ist es besonders vorteilhaft, wenn der Haltefinger aus einer Öffnung in der Schutzabdeckung ausfahrbar ist, so daß lediglich der Teil des Haltefingers, welcher zum Positionieren des Warenträgers erforderlich ist, über die Schutzabdeckung übersteht und insbesondere eine Lagerung des Haltefingers innerhalb der Schutzabdeckung und somit von dieser geschützt angeordnet ist.

Ferner ist es von Vorteil, wenn eine Betätigungsvorrichtung für den Haltefinger in der Schutzabdeckung angeordnet ist, so daß auch diese Betätigungsvorrichtung nicht dem Behandlungsmittel ausgesetzt ist.

Eine besonders zweckmäßige Art der Positionierung sieht vor, daß der Warenträger auf gegenüberliegenden Seiten, d.h. aus einer Vorderseite und Rückseite in Förderrichtung gesehen, durch jeweils einen Haltefinger exakt positionierbar ist.

Dadurch ist jeweils eine genaue Stellung des Warenträgers in der Behandlungsstation gewährleistet.

Weitere Merkmale und Vorteile der Erfindung sind Gegenstand der nachfolgenden Beschreibung sowie der zeichnerischen Darstellung eines Ausführungsbeispieles. In der Zeichnung zeigen:
- Fig. 1: einen Querschnitt durch eine Behandlungsanlage mit einer erfindungsgemäßen Fördereinrichtung;
- Fig. 2: eine vergrößerte Darstellung des Bereichs A in Fig. 1;
- Fig. 3: eine Draufsicht in Richtung des Pfeils B in Fig. 2 und
- Fig. 4: eine Seitenansicht in Richtung des Pfeils C in Fig. 2.

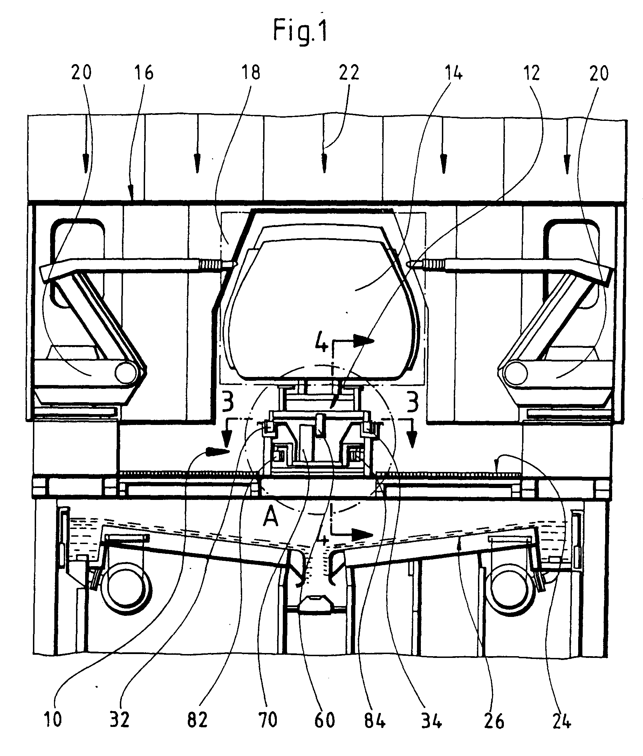

Eine in Fig. 1 als Ganzes mit 10 bezeichnete erfindungsgemäße Fördereinrichtung dient zur Förderung eines Warenträgers 12, auf welchem eine Fahrzeugkarosserie 14 als Behandlungsgut gehalten ist, durch eine Behandlungsanlage, im in Fig. 1 dargestellten Fall eine Lackieranlage 16 für die Fahrzeugkarosserie 14.

In einem in Fig. 1 strichpunktiert umgrenzten Behandlungsbereich 18 der Lackieranlage 16, durch welchen die Fahrzeugkarosserie 14 gefördert wird, erfolgt eine Lackierung der Fahrzeugkarosserie 14, insbesondere eine Innenlackierung derselben, durch aufgestellte Roboter 20, die beispielsweise von beiden Seiten die Fahrzeugkarosserie 14 spritzen oder vorzugsweise die Innenlackierung der Fahrzeugkarosserie 14 vornehmen.

Um überflüssigen Lacknebel aus dem Behandlungsbereich 18 zu entfernen, wird durch eine nicht dargestellte Luftzuführeinrichtung ein ständiger Luftstrom 22 von oben nach unten geführt, welcher nach dem Behandlungsbereich 18 einen luftdurchlässigen Boden 24 sowie auch die Fördereinrichtung 10 durchströmt und in einem Lackabscheider 26 gesammelt und abgeführt wird.

Der Behandlungsbereich 18 bildet dabei eine Behandlungsstation, in welcher der Warenträger zur Behandlung des auf diesem gehaltenen Behandlungsgut angehalten und nach einer Behandlung desselben zur nächsten Station weitergefördert wird.

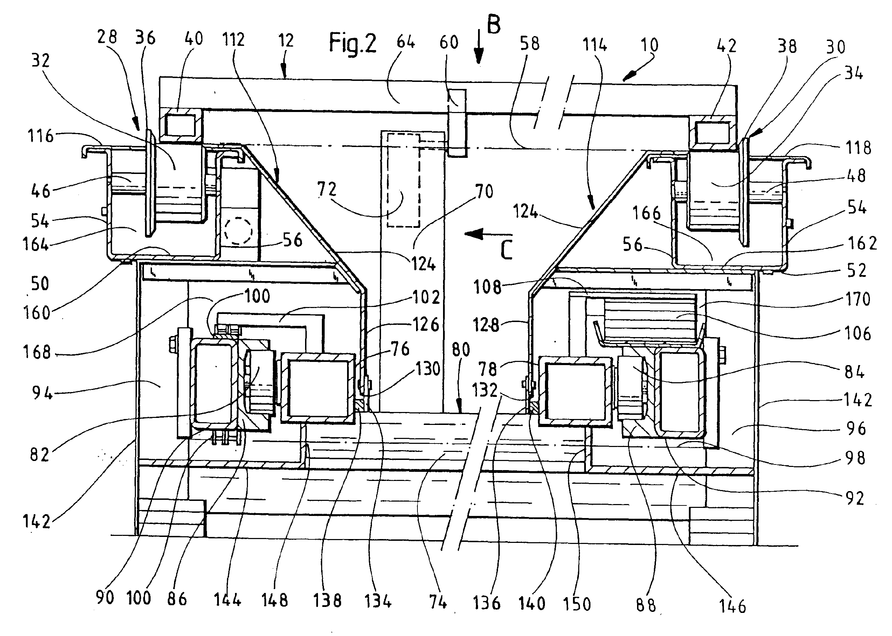

Wie in Fig. 2 dargestellt, umfaßt ein Ausführungsbeispiel der erfindungsgemäßen Fördereinrichtung 10 zwei parallel zueinander verlaufende Reihen 28 und 30 von hintereinander angeordneten Führungselementen 32, welche Rollen darstellen, die jeweils einen außen liegenden Führungsflansch 36 bzw. 38 aufweisen.

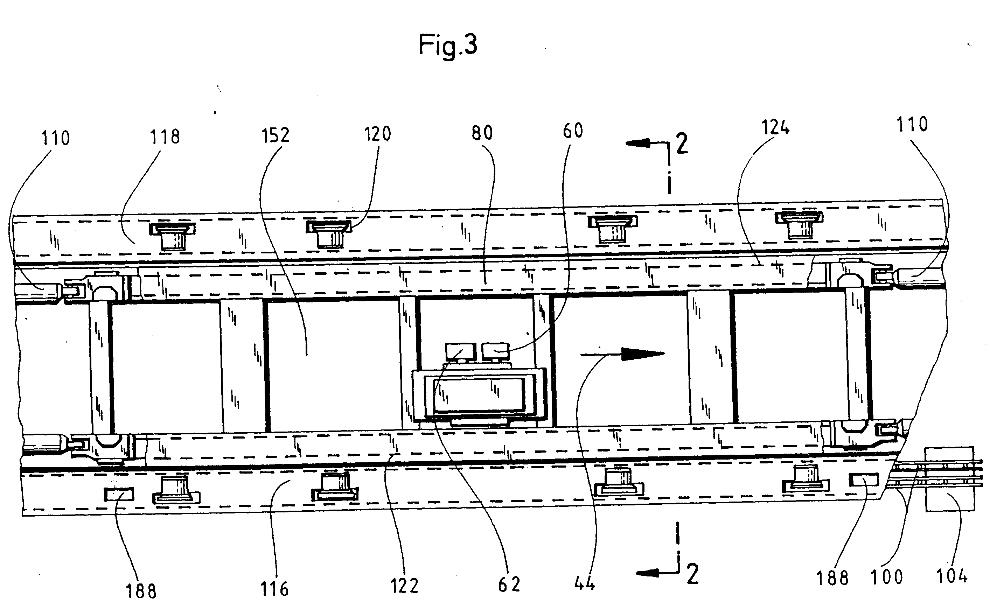

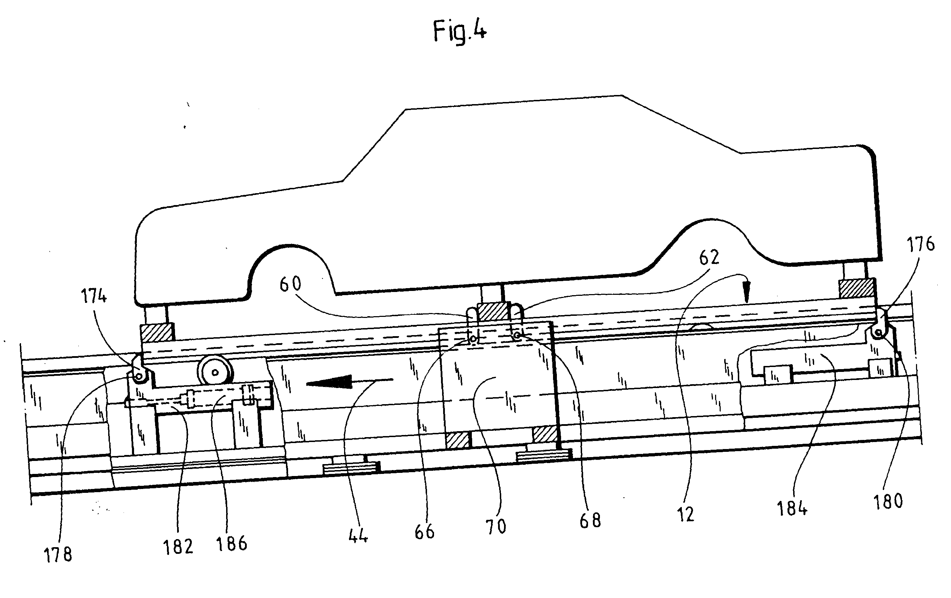

Der Warenträger 12 umfaßt seinerseits zwei Längsträger 40 und 42, die auf den Reihen 28, 30 der hintereinanderliegenden Rollen 32 und 34 aufliegen und auf diesen in Förderrichtung 44, eingezeichnet in Fig. 3 und 4, verschieblich sind.

Jede der Rollen 32 und 34 ist ihrerseits auf einer Welle 46 bzw. 48 drehbar gelagert, wobei die Wellen 46 und 48 von einem U-förmigen Wellenträger 50 bzw. 52 zwischen Seitenwänden 54 und 56 desselben gehalten sind.

Die Wellenträger 50 und 52 verlaufen parallel zueinander in Förderrichtung 44 und weisen quer zur Förderrichtung 44 einen Abstand voneinander auf.

Die Reihen 28 und 30 von hintereinanderliegenden Rollen 32 und 34 bilden somit gemeinsam eine Führungsbahn, welche den Warenträger 12 in der Förderrichtung 44 in einer Führungsebene 58 führt.

Ein Weiterbewegen des Warenträgers 12 erfolgt, wie in den Fig. 2 und 3 dargestellt, durch zwei Mitnahmefinger 60 und 62, welche in der Förderrichtung 44 vor und hinter einer Querstrebe 64 des Warenträgers 12 angreifen, die sich zwischen den Längsträgern 40 und 42 des Warenträgers 12 erstreckt und diese verbindet. Die Mitnahmefinger 60 und 62 sind dabei, wie in Fig. 4 dargestellt, jeweils um eine Achse 66 bzw. 68 schwenkbar an einer Aufnahme 70 gelagert und durch eine Stelleinrichtung 72 von einer greifenden, an der Querstrebe 64 beidseitig anliegenden Stellung in eine nichtgreifende Stellung, in Fig. 4 durch Pfeile angedeutet, verschwenkbar, in welcher die Mitnahmefinger 60 und 62 ohne Berührung mit der Querstrebe 64 unter dieser hindurchfahrbar sind.

Die Aufnahme 70 ruht dabei auf einem Förderträger 74, welcher sich seinerseits zwischen zwei Rahmenlängsträgern 76 und 78 erstreckt und Teil eines als Ganzes mit 80 bezeichneten Förderrahmens ist. Die Rahmenlängsträger 76 und 78 erstrecken sich ebenfalls parallel zur Förderrichtung 44 und quer zu dieser im Abstand voneinander. Jeder dieser Rahmenlängsträger 76 und 78 ist auf der dem jeweils anderen Rahmenlängsträger 78 und 76 gegenüberliegenden Seite jeweils mit mindestens zwei Tragrollen 82 bzw. 84 versehen, welche in einer C-förmig ausgebildeten Längsschiene 86 bzw. 88 zwischen den beiden C-förmigen Schenkeln in der Förderrichtung 44 sich auf dem jeweils unteren Schenkel abrollend bewegbar ist.

Der Förderrahmen 80 ist somit durch diese Tragrollen 82 und 84 an den Längsschienen 86 und 88 geführt. Die Längsschienen 86 und 88 sind ihrerseits an parallel zur Förderdichtung 44 verlaufenden Längsholmen 90 und 92 gehalten, wobei die Längsholmen 90, 92 zusammen mit Ständern 94 und 96 ein Traggestell der Fördereinrichtung 10 bilden.

Vorzugsweise sind die Ständer 94 und 96 so angeordnet, daß auf ein oberes Ende derselben die Wellenträger 50 und 52 aufgesetzt und somit ebenfalls von den Ständern 94 und 96 getragen sind.

Die Längsschienen 86 und 88 laufen außerdem parallel zur Führungsebene 58, so daß durch die Tragrollen 82 und 84 der Förderträger 74 in einer Trägerebene 98 in der Förderrichtung 44 verschiebbar ist, wobei die Trägerebene 98 parallel zur Führungsebene 58 verläuft.

Die Längsschienen 86 und 88 sind vorzugsweise so angeordnet, daß sie auf der dem Warenträger 12 abgewandten Seite der Reihen 28 und 30 von Rollen 32 und 34, vorzugsweise unterhalb derselben liegen.

Die Verschiebung des Förderrahmens 80 erfolgt über eine Doppelkette 100, welche auf einer Seite des Förderrahmens 80 auf dem Längsholmen 90 aufliegend verläuft und über einen Seitenarm 102 mit dem Rahmenlängsträger 76 verbunden ist. Diese Doppelkette 100 läuft über einen Kettenantrieb 104, welcher an einer beliebig wählbaren Stelle längs der Fördereinrichtung 10 angeordnet ist.

Ferner erfolgt eine Verbindung zwischen der Stelleinrichtung 72 und einer zeichnerisch nicht dargestellten Steuerung über eine Kabelzuführung 106, welche auf dem Holmen 92 und der Längsschiene 88 aufliegt und einerseits fest mit dem Längsholmen 90 und andererseits nach einer Umbiegung fest mit einem Seitenarm 108 verbunden ist, der von dem Rahmenlängsträger 78 wegführt.

Die erfindungsgemäße Fördereinrichtung 10 ist vorzugsweise so aufgebaut, daß sie mehrere in Förderrichtung 44 hintereinander angeordnete Förderrahmen 80 aufweist, welche - wie in Fig. 3 dargestellt - jeweils über Schubstangen 110 miteinander verbunden sind, so daß sämtliche Förderrahmen 80 gemeinsam in der Förderrichtung 44 oder entgegengesetzt zu dieser bewegbar sind.

Wie insbesondere in den Fig. 2 und 3 dargestellt, sind die die Führungsbahn bildenden Reihen 28 und 30 der Rollen 32 und 34 sowie die darunterliegenden Längsschienen von jeweils einer Schutzabdeckung 112 und 114 abgedeckt, wobei die Schutzabdeckungen 112 und 114 ein im wesentlichen parallel zur Führungsebene 58 verlaufendes Oberteil 116, 118 aufweisen, welche jeweils der Form der Rolle 32, 34 angepaßte Rollenöffnungen 120 aufweisen, aus welchen die Rollen 32, 34 geringfügig überstehen. Die Rollenöffnungen 120 sind dabei so gestaltet, daß ein möglichst kleiner Teil der Rollen 32 und 34 über die Oberteile 116 bzw. 118 übersteht. Die gesamte Lagerung der Rollen 32 bzw. 34 mittels der Wellen 46 bzw. 48 liegt unterhalb der Oberteile 116 bzw. 118 und ist somit von diesen vollständig abgedeckt. An diese Oberteile 116 bzw. 118 schließt sich jeweils eine schräg nach unten ver- laufende Innenwand 122 bzw. 124 an, die in eine senkrecht verlaufende Innenwand 126 bzw. 128 übergeht, welche an einer Unterkante 130 bzw. 132 jeweils eine Gummilippe 134 bzw. 136 tragen, die an einer Abdichtleiste 138 bzw. 140 des Förderrahmens 80 anliegt, wobei diese Abdichtleisten 138, 140 vorzugsweise an den einander zugewandten Seiten der Rahmenlängsträger 76 bzw. 78 angeordnet sind.

Ferner schließt sich an das jeweilige Oberteil 116 bzw. 118 zunächst jeweils die Seitenwand 54 der Wellenträger 50 und 52 und infolge dieser jeweils eine untere Seitenwand 142 an, wobei die Seitenwand 54 und die untere Seitenwand 142 gemeinsam eine Außenwand der Schutzabdeckungen 112 bzw. 114 bilden, die mindestens bis zu einem Bodenteil 144 bzw. 146 der jeweiligen Schutzabdeckung 112 bzw. 114 verlaufen. Dieses Bodenteil 144 bzw. 146 verläuft waagrecht von der jeweiligen Außenwand 54, 142 nach innen und hat einen nach oben in Richtung des Rahmenlängsträgers 76 bzw. abstehenden Randbereich 148 bzw. 150, welcher vorzugsweise dicht unterhalb des jeweiligen Rahmenlängsträgers 76 bzw. 78 endet.

Da die Außenwände 54, 142 jeweils eine äußere Begrenzung der Wellenträger 50 und 52 bilden und auch außerhalb der Ständer 94 bzw. 96 sowie der Längsholme 90 bzw. 92 verlaufen, deckt die Schutzabdeckung 112 die Längsschiene 86 mit der darin laufenden Tragrolle 82, den Rahmenlängsträger 76 sowie auch den Seitenarm 102 mit der Doppelkette 100 und auch den Kettenantrieb 104 ab, während die Schutzabdeckung 114 ebenfalls die Längsschiene 88 mit der darin laufenden Tragrolle 84, den Rahmenlängsträger 78 sowie den Seitenarm 108 mit der Kabelzuführung 106 abdeckt.

Von dem Förderrahmen 80 erstreckt sich somit lediglich der Förderträger 74 durch einen Freiraum 152 zwischen den Innenwänden 126 und 128, wobei der Freiraum 152 bewußt offengelassen wurde, um einen Durchtritt für Teile des Luftstroms 22 zu ermöglichen. Diesem ein Behandlungsmittel, beispielsweise Lacknebel, mittragenden Teil des Luftstroms 22, ist somit lediglich der Förderträger 74 mit der Aufnahme 70 und den Mitnahmefingern 60 und 62 ausgesetzt.

Ferner ist durch die Gummilippen 134 und 136, welche an den Abdichtleisten 138 und 140 anliegen und die unmittelbar bis zu den Rahmenlängsträgern 76 und 78 reichenden Randbereiche 148 und 150 der Innenraum der Schutzabdeckungen 112 bzw. 114 im wesentlichen vollständig von dem von dem Teil des Luftstroms 22 mitgetragenen Lacknebel abgeschirmt und somit nicht mehr Verschmutzungen durch diesen Lacknebel ausgesetzt.

Die Schutzabdeckungen 112 und 114 bilden vorzugsweise parallel zu der Förderrichtung und parallel zueinander verlaufende Kanäle, aus welchen lediglich die Rollen 32 und 34 geringfügig überstehen, sowie zwischen welchen sich der die Aufnahme 70 tragende Förderträger 74 erstreckt. Alle übrigen Teile der Fördereinrichtung 10 sind von durch den Luftstrom 22 mitgetragenem Lacknebel geschützt.

Vorzugsweise sind die Schutzabdeckungen 112 und 114 noch durch einen Boden 160 bzw. 162 der Wellenträger 50 bzw. 52 so unterteilt, daß die Wellenträger 50 bzw. 52 einen Aufnahmekanal 164 bzw. 166 für die Rollen 32 bzw. 34 bilden, der vollständig getrennt ist von einem Aufnahmekanal 168 bzw. 170 für die Längsschienen 86 bzw. 88, die Doppelkette 100 und die Kabelzuführung 106. Dadurch wird ein Eindringen von Schmutz über die Rollenöffnungen 120 in die Aufnahmekanäle 168 und 170 verhindert.

Wie in Fig. 4 dargestellt, sind ferner zur Positionierung des Warenträgers 12 in einer Behandlungsstation Haltefinger 174 und 176 angeordnet, welche zwischen den Rollen 32 der Reihe 28 nach oben schwenkbar und endseitig an dem Längsträger 40 zur Anlage bringbar sind, so daß der Warenträger 12 in der jeweiligen Station exakt fixiert ist.

Die Haltefinger 174 und 176 sind um eine Schwenkachse 178 bzw. 180 schwenkbar an einer Betätigungseinrichtung 182 bzw. 184 gehalten, wobei jede der Betätigungseinrichtungen 182 bzw. 184 einen Hydraulikzylinder 186 zur Schwenkung des jeweiligen Haltefingers 174 bzw. 176 aufweist.

Um die Haltefinger 174 bzw. 176 an jeweils gegenüberliegenden Enden des Längsträgers 40 zur Anlage bringen zu können, ist in dem Oberteil 116 für jeden der Haltefinger 174 bzw. 176 eine Öffnung 188 vorgesehen, aus welcher dieser Haltefinger 174 bzw. 176 so weit ausschwenkbar ist, daß sein über das Oberteil 116 überstehender Teil den Längsträger 40 endseitig fixiert. Der übrige Teil des jeweiligen Haltefingers 174 bzw. 176 sowie die Betätigungseinrichtung 182 bzw. 184 mitsamt den Schwenkachsen 178 bzw. 180 sind unter der Schutzabdeckung 112 und somit ebenfalls geschützt von dem Lacknebel tragenden Luftstrom angeordnet.

## Patentansprüche

1. Fördereinrichtung zum Fördern von Warenträgern mit darauf gehaltenem Behandlungsgut (14) durch einen Behandlungsbereich (18) einer Behandlungsanlage (16), insbesondere einer Lackieranlage, umfassend eine die Warenträger (12) in einer Führungsebene (58) führende Führungsbahn (28,30), welche zwei im Abstand voneinander angeordnete und in einer Förderrichtung verlaufende Reihen (28,30) von Führungselementen (32,34) aufweist, mindestens eine Behandlungsstation, in welcher jeweils einer der Warenträger (12) während eines Taktintervalls positionierbar ist, und mindestens ein Förderglied (60,62), welches in vorbestimmten Zeitintervallen an dem Warenträger (12) angreift und diesen in der Förderrichtung (44) von der Behandlungsstation wegbewegt, wobei jedes Förderglied (60, 62) zwischen sich in Förderrichtung (44) erstreckenden Längsführungen (86, 88) geführt ist, **dadurch gekennzeichnet,**
daß jede der Längsführungen (86 bzw. 88) unter jeweils einer Schutzabdeckung (112 bzw. 114) verläuft, die zum Schutz der Längsführungen (86 bzw. 88) gegen den Einfluß des Behandlungsmittels zum Behandlungsbereich (18) hin geschlossen sind und dem Behandlungsbereich (18) abgewandte Öffnungen für einen Förderträger (74) aufweisen, daß sich der Förderträger (74) zwischen den unter den Schutzabdeckungen (112,114) verlaufenden Längsführungen (86,88) erstreckt und an diesen geführt ist und daß der Förderträger (74) das Förderglied (60,62) trägt.

2. Fördereinrichtung nach Anspruch 1, dadurch gekennzeichnet, daß die Führungsbahn (28, 30) die Warenträger (12) auf einer dem Behandlungsbereich (18) abgewandten Seite führt.

3. Fördereinrichtung nach Anspruch 2, dadurch gekennzeichnet, daß die Führungsbahn (28, 30) unterhalb des Behandlungsbereichs (18) verläuft.

4. Fördereinrichtung nach einem der voranstehenden Ansprüche, dadurch gekennzeichnet, daß die Schutzabdeckungen (112, 114) sich von der Führungsebene (58) nach unten erstrecken.

5. Fördereinrichtung nach einem der voranstehenden Ansprüche, dadurch gekennzeichnet, daß die Schutzabdeckungen (112, 114) Lagerungen (46, 48) der Führungselemente (32, 34) mit abdecken.

6. Fördereinrichtung nach einem der voranstehenden Ansprüche, dadurch gekennzeichnet, daß die Schutzabdeckungen (112, 114) Öffnungen (120) aufweisen, durch welche die Führungselemente (32, 34) teilweise herausragen.

7. Fördereinrichtung nach einem der voranstehenden Ansprüche, dadurch gekennzeichnet, daß die Führungselemente Führungsrollen (32, 34) sind.

8. Fördereinrichtung nach einem der voranstehenden Ansprüche, dadurch gekennzeichnet, daß die Schutzabdeckungen (112, 114) in einen Raum (164, 166) zur Aufnahme der Führungselemente (32, 34) und in einen von diesem getrennten Raum (168, 170) zur Aufnahme der Längsführungen (86, 88) unterteilt sind.

9. Fördereinrichtung nach einem der voranstehenden Ansprüche, dadurch gekennzeichnet, daß die Schutzabdeckungen (112, 114) in Förderrichtung (44) verlaufende Kanäle (164, 166; 168, 170) bilden.

10. Fördereinrichtung nach einem der voranstehenden Ansprüche, dadurch gekennzeichnet, daß die Schutzabdeckungen (112, 114) sich in Richtung von dem Behandlungsbereich (18) weg konisch erweiternd ausgebildet sind.

11. Fördereinrichtung nach Anspruch 10, dadurch gekennzeichnet, daß die Schutzabdeckungen (112, 114) in Richtung von dem Behandlungsbereich (18) weg konisch aufeinander zu verlaufende Innenwände (122, 124) aufweisen.

12. Fördereinrichtung nach Anspruch 11, dadurch gekennzeichnet, daß die Innenwände (122, 124) sich an die Öffnungen (120) für die Führungselemente (32, 34) anschließen.

13. Fördereinrichtung nach einem der voranstehenden Ansprüche, dadurch gekennzeichnet, daß die Schutzabdeckungen (112, 114) für die parallel zueinander verlaufenden Längsführungen (86, 88) zwischen sich einen Freiraum (152) bilden, in welchem das Förderglied (60, 62) in Förderrichtung (44) verfahrbar ist.

14. Fördereinrichtung nach Anspruch 13, dadurch gekennzeichnet, daß der Freiraum (152) einen freien Luftdurchtritt für einen durch den Behandlungsbereich (18) geführten Luftstrom (22) bildet.

15. Fördereinrichtung nach einem der voranstehenden Ansprüche, dadurch gekennzeichnet, daß die Schutzabdeckungen (112, 114) eine Außenwand (54, 142) aufweisen, welche bis zu einem Bodenteil (144, 146) gezogen ist.

16. Fördereinrichtung nach einem der voranstehenden Ansprüche, dadurch gekennzeichnet, daß der Förderträger (74) ausschließlich in einer zur Förderrichtung (44) parallelen Trägerebene (98) und in dieser nur in der Förderrichtung (44) und entgegengesetzt dazu bewegbar ist.

17. Fördereinrichtung nach einem der voranstehenden Ansprüche, dadurch gekennzeichnet, daß ein Verschiebeantrieb (100, 104) für den Förderträger (74) unter der Schutzabdeckung (112) angeordnet ist.

18. Fördereinrichtung nach einem der voranstehenden Ansprüche, dadurch gekennzeichnet, daß eine Kabelzuführung (106) für den Förderträger (74) unter der Schutzabdeckung (114) angeordnet ist.

19. Fördereinrichtung nach einem der voranstehenden Ansprüche, dadurch gekennzeichnet, daß die Längsführungen (86, 88) auf einer dem Behandlungsbereich (18) abgewandten Seite der Reihen (28, 30) von Führungselementen (32, 34) angeordnet sind.

20. Fördereinrichtung nach einem der voranstehenden Ansprüche, dadurch gekennzeichnet, daß die Längsführungen Längsschienen (86, 88) sind, an denen der Förderträger (74) geführt ist.

21. Fördereinrichtung nach einem der voranstehenden Ansprüche, dadurch gekennzeichnet, daß der Förderträger (74) Teil eines Förderrahmens (80) ist.

22. Fördereinrichtung nach Anspruch 21, dadurch gekennzeichnet, daß der Förderrahmen (80) sich in Förderrichtung (44) erstreckende Rahmenlängsträger (76, 78) aufweist.

23. Fördereinrichtung nach Anspruch 22, dadurch gekennzeichnet, daß die Schutzabdeckungen (112, 114) mit ihren Innenwänden (126, 128) an den Rahmenlängsträgern (76, 78) anliegen.

24. Fördereinrichtung nach Anspruch 23, dadurch gekennzeichnet, daß die Innenwände (126, 128) mit einer Unterkante (130, 132) an dem Rahmen (80) anliegen.

25. Fördereinrichtung nach Anspruch 24, dadurch gekennzeichnet, daß die Unterkante eine Gummilippe (134, 136) trägt.

26. Fördereinrichtung nach einem der Ansprüche 15 bis 25, dadurch gekennzeichnet, daß das Bodenteil (144, 146) einen zum Förderrahmen (80) geführten und längs diesem abschließenden Randbereich (148, 150) aufweist.

27. Fördereinrichtung nach einem der voranstehenden Ansprüche, dadurch gekennzeichnet, daß der Förderträger (74) eine Aufnahme (70) für das Förderglied (60, 62) trägt.

28. Fördereinrichtung nach Anspruch 27, dadurch gekennzeichnet, daß die Aufnahme (70) zwischen den die Längsführungen (86, 88) übergreifenden Schutzabdeckungen (112, 114) angeordnet ist.

29. Fördereinrichtung nach Anspruch 27 oder 28, dadurch gekennzeichnet, daß das Förderglied einen schwenkbar an der Aufnahme gelagerten Mitnahmefinger (60, 62) umfaßt.

30. Fördereinrichtung nach einem der voranstehenden Ansprüche, dadurch gekennzeichnet, daß das Förderglied (60, 62) an einer Querstrebe (64) des Warenträgers (12) angreift.

31. Fördereinrichtung nach einem der voranstehenden Ansprüche, dadurch gekennzeichnet, daß das Förderglied zwei zum Angriff am Warenträger (12) aufeinander zu schwenkbare und die Querstrebe (64) in Förderrichtung (44) und entgegengesetzt dazu zum Fördern haltende Mitnahmefinger (60, 62) umfaßt.

32. Fördereinrichtung nach einem der voranstehenden Ansprüche, dadurch gekennzeichnet, daß die Warenträger (12) in der Behandlungsstation durch einen Haltefinger (174, 176) positionierbar sind.

33. Fördereinrichtung nach Anspruch 32, dadurch gekennzeichnet, daß der Haltefinger (174, 176) aus einer Öffnung (188) in der Schutzabdeckung (112) ausfahrbar ist.

34. Fördereinrichtung nach einem der Ansprüche 32 oder 33, dadurch gekennzeichnet, daß eine Betätigungseinrichtung (182, 184) für den Haltefinger (174, 176) in der Schutzabdeckung (112) angeordnet ist.

35. Fördereinrichtung nach einem der Ansprüche 32 bis 34, dadurch gekennzeichnet, daß der Warenträger (12) auf gegenüberliegenden Seiten durch jeweils einen Haltefinger (174, 176) exakt positionierbar ist.

## Claims

1. Conveyor device for conveying article carriers with an article to be treated (14) held thereon through a treatment area (18) of a treatment plant (16), in particular a paint plant, comprising a track (28, 30) guiding the article carriers (12) in a guide plane (58), said track having two rows (28, 30) of guide elements (32, 34) arranged in spaced relation to one another and extending in a direction of conveyance, at least one treatment station, one of the article carriers (12) being positionable each time in said station during a timed interval, and at least one conveyor member (60, 62) engaging in predetermined time intervals on the article carrier (12) and moving this in the direction of conveyance (44) away from the treatment station, each conveyor member (60, 62) being guided between longitudinal guides (86, 88) extending in the direction of conveyance (44), characterized in that each of the longitudinal guides (86 and 88, respectively) extends beneath a protective cover (112 and 114, respectively), said covers being closed towards the treatment area (18) for protecting the longitudinal guides (86 and 88, respectively) against the effect of the treatment agent and having openings for a conveyor carrier (74) remote from the treatment area (18), that the conveyor carrier (74) extends between the longitudinal guides (86, 88) extending beneath the protective covers (112, 114) and is guided on them and that the conveyor carrier (74) bears the conveyor member (60, 62).

2. Conveyor device as defined in claim 1, characterized in that the track (28, 30) guides the article carriers (12) on a side facing away from the treatment area (18).

3. Conveyor device as defined in claim 2, characterized in that the track (28, 30) extends beneath the treatment area (18).

4. Conveyor device as defined in any of the preceding claims, characterized in that the protective covers (112, 114) extend downwards from the guide plane (58).

5. Conveyor device as defined in any of the preceding claims, characterized in that the protective covers (112, 114) also cover bearings (46, 48) of the guide elements (32, 34).

6. Conveyor device as defined in any of the preceding claims, characterized in that the protective covers (112, 114) have openings (120), the guide elements (32, 34) projecting partially therethrough.

7. Conveyor device as defined in any of the preceding claims, characterized in that the guide elements are guide rollers (32, 34).

8. Conveyor device as defined in any of the preceding claims, characterized in that the protective covers (112, 114) are subdivided into a space (164, 166) for accommodating the guide elements (32, 34) and a space (168, 170) separated therefrom for accommodating the longitudinal guides (86, 88).

9. Conveyor device as defined in any of the preceding claims, characterized in that the protective covers (112, 114) form channels (164, 166; 168, 170) extending in the direction of conveyance (44).

10. Conveyor device as defined in any of the preceding claims, characterized in that the protective covers (112, 114) are designed to widen conically in the direction away from the treatment area (18).

11. Conveyor device as defined in claim 10, characterized in that the protective covers (112, 114) have inner walls (122, 124) extending conically towards one another in the direction away from the treatment area (18).

12. Conveyor device as defined in claim 11, characterized in that the inner walls (122, 124) adjoin the openings (120) for the guide elements (32, 34).

13. Conveyor device as defined in any of the preceding claims, characterized in that the protective covers (112, 114) form a free space (152) between them for the longitudinal guides (86, 88) extending parallel to one another, the conveyor member (60, 62) being displaceable in the direction of conveyance (44) in said free space.

14. Conveyor device as defined in claim 13, characterized in that the free space (152) forms a free air passage for a stream of air (22) guided through the treatment area (18).

15. Conveyor device as defined in any of the preceding claims, characterized in that the protective covers (112, 114) have an outer wall (54, 142) drawn as far as a base portion (144, 146).

16. Conveyor device as defined in any of the preceding claims, characterized in that the conveyor carrier (74) is movable exclusively in a carrier plane (98) parallel to the direction of conveyance (44) and in this plane only in the direction of conveyance (44) and the direction opposite thereto.

17. Conveyor device as defined in any of the preceding claims, characterized in that a displacement drive (100, 104) for the conveyor carrier (74) is arranged beneath the protective cover (112).

18. Conveyor device as defined in any of the preceding claims, characterized in that a cable feed (106) for the conveyor carrier (74) is arranged beneath the protective cover (114).

19. Conveyor device as defined in any of the preceding claims, characterized in that the longitudinal guides (86, 88) are arranged on a side of the rows (28, 30) of guide elements (32, 34) facing away from the treatment area (18).

20. Conveyor device as defined in any of the preceding claims, characterized in that the longitudinal guides are longitudinal rails (86, 88), the conveyor carrier (74) being guided thereon.

21. Conveyor device as defined in any of the preceding claims, characterized in that the conveyor carrier (74) is part of a conveyor frame (80).

22. Conveyor device as defined in claim 21, characterized in that the conveyor frame (80) has longitudinal carriers (76, 78) extending in the direction of conveyance (44).

23. Conveyor device as defined in claim 22, characterized in that the protective covers (112, 114) abut with their inner walls (126, 128) on the longitudinal carriers (76, 78) of the frame.

24. Conveyor device as defined in claim 23, characterized in that the inner walls (126, 128) abut with a lower edge (130, 132) on the frame (80).

25. Conveyor device as defined in claim 24, characterized in that the lower edge bears a rubber lip (134, 136).

26. Conveyor device as defined in any of claims 15 to 25, characterized in that the base portion (144, 146) has an edge region (148, 150) leading to the conveyor frame (80) and abutting closely along this frame.

27. Conveyor device as defined in any of the preceding claims, characterized in that the conveyor carrier (74) bears a receiving means (70) for the conveyor member (60, 62).

28. Conveyor device as defined in claim 27, characterized in that the receiving means (70) is arranged between the protective covers (112, 114) engaging over the longitudinal guides (86, 88).

29. Conveyor device as defined in claim 27 or 28, characterized in that the conveyor member comprises an entrainment finger (60, 62) pivotally mounted on the receiving means.

30. Conveyor device as defined in any of the preceding claims, characterized in that the conveyor member (60, 62) engages a cross bar (64) of the article carrier (12).

31. Conveyor device as defined in any of the preceding claims, characterized in that the conveyor member comprises two entrainment fingers (60, 62) pivotable towards one another for engaging the article carrier (12) and holding the cross bar (64) for conveyance in the direction of conveyance (44) and the direction opposite thereto.

32. Conveyor device as defined in any of the preceding claims, characterized in that the article carrier (12) is positionable in the treatment station by a holding finger (174, 176).

33. Conveyor device as defined in claim 32, characterized in that the holding finger (174, 176) is extendable out of an opening (188) in the protective cover (112).

34. Conveyor device as defined in one of claims 32 or 33, characterized in that an actuating device (182, 184) for the holding finger (174, 176) is arranged in the protective cover (112).

35. Conveyor device as defined in any of claims 32 to 34, characterized in that the article carrier (12) is exactly positionable on opposite sides by a respective holding finger (174, 176).

## Revendications

1. Dispositif convoyeur servant à entraîner des supports d'articles, sur lesquels est retenu un article à traiter (14), à travers une zone de traitement (18) d'une installation de traitement (16), notamment d'une installation de peinturage, comportant une voie de guidage (28, 30) qui véhicule les supports d'articles (12) dans un plan de guidage (58) et qui possède deux séries (28, 30), disposées à distance l'une de l'autre et s'étendant dans une direction d'entraînement, d'éléments de guidage (32, 34), au moins un poste de traitement, dans lequel respectivement l'un des supports d'articles (12) peut être positionné pendant un intervalle de cadence, et au moins un organe d'entraînement (60, 62), qui s'accroche au support d'articles (12), à des intervalles de temps prédéterminés, et évacue ce dernier du poste de traitement dans la direction d'entraînement (44), chaque organe d'entraînement (60, 62) étant guidé entre des guides longitudinaux (86, 88), qui s'étendent dans la direction d'entraînement (44), caractérisé en ce que chacun des guides longitudinaux (86 ou 88) circule respectivement au-dessous de capots de protection respectifs (112 et 114), qui sont fermés en direction de la zone de traitement (18), pour protéger les guides longitudinaux (86 et 88) vis-à-vis d'influences du milieu de traitement et possèdent des ouvertures tournées à l'opposé de la zone de traitement (18) et prévues pour un support d'entraînement (64), que le support d'entraînement (64) s'étend entre les guides longitudinaux (86, 88) passant au-dessous des capots de protection (112, 114) et sont guidés par ces guides, et que le support d'entraînement (74) porte l'organe d'entraînement (60, 62).

2. Dispositif convoyeur selon la revendication 1, caractérisé en ce que la voie de guidage (28, 30) guide les supports d'articles (12), sur un côté tourné à l'opposé de la zone de traitement (18).

3. Dispositif convoyeur selon la revendication 2, caractérisé par le fait que la voie de guidage (28, 30) s'étend au-dessous de la zone de traitement (18).

4. Dispositif convoyeur selon l'une des revendications précédentes, caractérisé en ce que les capots de protection (112, 114) s'étendent vers le bas à partir du plan de guidage (58).

5. Dispositif convoyeur selon l'une des revendications précédentes, caractérisé en ce que les capots de protection (112, 114) recouvrent simultanément des supports (46, 48) prévus pour les éléments de guidage (32, 34).

6. Dispositif convoyeur selon l'une des revendications précédentes, caractérisé en ce que les capots de protection (112, 114) comportent des ouvertures (120), hors desquelles font saillie partiellement les éléments de guidage (32, 34).

7. Dispositif convoyeur selon l'une des revendications précédentes, caractérisé en ce que les éléments de guidage sont des galets de guidage (32, 34).

8. Dispositif convoyeur selon l'une des revendications précédentes, caractérisé en ce que les capots de protection (112, 114) sont subdivisés en un espace (164, 166) servant à recevoir les éléments de guidage (32, 34) et en un espace (168, 170) séparé de l'espace précédent et servant à loger les guides longitudinaux (86, 88).

9. Dispositif convoyeur selon l'une des revendications précédentes, caractérisé en ce que les capots de protection (112, 114) forment des canaux (164, 166, 168, 170), qui s'étendent dans la direction d'entraînement (44).

10. Dispositif convoyeur selon l'une des revendications précédentes, caractérisé en ce que les capots de protection (112, 114) sont réalisés avec une forme conique s'élargissant dans une direction tournée à l'opposé de la zone de traitement (18).

11. Dispositif convoyeur selon l'une des revendications précédentes, caractérisé en ce que les capots de protection (112, 114) possèdent des parois intérieures (122, 124), qui se rapprochent selon une disposition conique dans une direction tournée à l'opposé de la zone de traitement (18).

12. Dispositif convoyeur selon la revendication 11, caractérisé en ce que les parois intérieures (122, 124) se raccordent aux ouvertures (120) prévues pour les éléments de guidage (32, 34).

13. Dispositif convoyeur selon l'une des revendications précédentes, caractérisé en ce que les capots de protection (112, 114) pour les guides longitudinaux parallèles (86, 88) délimitent entre eux un espace libre (152), dans lequel l'organe d'entraînement (60, 62) est déplaçable dans la direction d'entraînement (44).

14. Dispositif convoyeur selon la revendication 13, caractérisé en ce que l'espace libre (152) forme un passage libre pour l'air pour un courant d'air (22) traversant la zone de traitement (18).

15. Dispositif convoyeur selon l'une des revendications précédentes, caractérisé en ce que les capots de protection (112, 114) possèdent une paroi extérieure (54, 142), qui s'étend jusqu'à un élément de fond (144, 146).

16. Dispositif convoyeur selon l'une des revendications précédentes, caractérisé en ce que le support d'entraînement (74) est déplaçable exclusivement dans un plan de support (98) parallèle à la direction d'entraînement (44) et, dans ce dernier, uniquement dans la direction d'entraînement (44) et en sens opposé.

17. Dispositif convoyeur selon l'une des revendications précédentes, caractérisé en ce qu'un dispositif d'entraînement en translation (100, 104) pour le support d'entraînement (74) est disposé au-dessous du capot de protection (112).

18. Dispositif convoyeur selon l'une des revendications précédentes, caractérisé en ce qu'un élément d'arrivée de câble (106) pour le support d'entraînement (74) est disposé au-dessous du capot de protection (114).

19. Dispositif convoyeur selon l'une des revendications précédentes, caractérisé en ce que les guides longitudinaux (86, 88) sont disposés sur un côté, tourné à l'opposé de la zone d'entraînement (18), des séries (28, 30) d'éléments de guidage (32, 34).

20. Dispositif convoyeur selon l'une des revendications précédentes, caractérisé en ce que les guides longitudinaux sont des rails longitudinaux (86, 88), sur lesquels est guidé le support d'entraînement (74).

21. Dispositif convoyeur selon l'une des revendications précédentes, caractérisé en ce que le support d'entraînement (74) fait partie d'un cadre d'entraînement (80).

22. Dispositif convoyeur selon la revendication 21, caractérisé en ce que le cadre d'entraînement (80) possède des longerons en forme de cadres (76, 78) qui s'étendent dans la direction d'entraînement (44).

23. Dispositif convoyeur selon la revendication 22, caractérisé en ce que les capots de protection (112, 114) s'appliquent, par leurs parois intérieures (126, 128), contre les longerons en forme de cadres (76, 78).

24. Dispositif convoyeur selon la revendication 23, caractérisé en ce que les parois intérieures (126, 128) s'appliquent par un bras inférieur (130, 132) contre le cadre (80).

25. Dispositif convoyeur selon la revendication 24, caractérisé en ce que le bord inférieur porte une lèvre en caoutchouc (134, 136).

26. Dispositif convoyeur selon l'une des revendications 15 à 25, caractérisé en ce que l'élément de fond (144, 146) possède une zone marginale (148, 150), qui est guidée par rapport au cadre d'entraînement (80) et se termine le long de ce cadre.

27. Dispositif convoyeur selon l'une des revendications précédentes, caractérisé en ce que le support d'entraînement (74) porte un logement (70) servant à recevoir l'organe d'entraînement (60, 62).

28. Dispositif convoyeur selon la revendication 27, caractérisé en ce que le logement (70) est disposé entre les capots de protection (112, 114), qui s'engagent au-dessus des guides longitudinaux (86, 88).

29. Dispositif convoyeur selon la revendication 27 ou 28, caractérisé en ce que l'organe d'entraînement comprend un doigt d'entraînement (60, 62) monté de manière à pouvoir pivoter sur le logement.

30. Dispositif convoyeur selon l'une des revendications précédentes, caractérisé en ce que l'organe d'entraînement (60, 62) est accroché à une traverse (64) du support d'articles (12).

31. Dispositif convoyeur selon l'une des revendications précédentes, caractérisé en ce que l'organe d'entraînement comporte deux doigts d'entraînement (60, 62), qui peuvent pivoter l'un vers l'autre pour s'accrocher au support d'articles (12) et qui retiennent les traverses (64) dans la direction d'entraînement (44) et en sens opposé.

32. Dispositif convoyeur selon l'une des revendications précédentes, caractérisé en ce que les supports d'articles (12) peuvent être positionnés dans le poste de traitement, par un doigt de retenue (174, 176).

33. Dispositif convoyeur selon la revendication 32, caractérisé en ce que le doigt de retenue (174, 176) peut être retiré d'une ouverture (188) ménagée dans le capot de protection (112).

34. Dispositif convoyeur selon l'une des revendications 32 ou 33, caractérisé en ce qu'un dispositif d'actionnement (182, 184) pour le doigt de retenue (174, 176) est disposé dans le capot de protection (112).

35. Dispositif convoyeur selon l'une des revendications 32 à 34, caractérisé en ce que le support d'articles (12) peut être positionné de façon précise sur des côtés opposés, par des doigts respectifs de retenue (174, 176).
